# FASCICULE DE BREVET EUROPEEN

(11) **EP 2 089 754 B1**
(45) Date de publication et mention de la délivrance du brevet: **04.05.2011**
(21) Numéro de dépôt: 07825614.6
(22) Date de dépôt: 02.11.2007
(51) Int. Cl.: G02C 5/00, G02C 7/02

(54) **DISPOSITIF DE VISION BINOCULAIRE**
BINOKULARE BETRACHTUNGSEINRICHTUNG
BINOCULAR VIEWING DEVICE

(30) Priorité: 16.11.2006 FR 0610034
(43) Date de publication de la demande: 19.08.2009
(73) Titulaire: MERZ, François, 2000 Neuchâtel (CH)
(72) Inventeur: MERZ, François, 2000 Neuchâtel (CH)
(74) Mandataire: Bugnion Genève
(86) Numéro de dépôt international: PCT/IB2007/003391
(87) Numéro de publication internationale: WO 2008/059334

(56) Documents cités:
- EP-A- 1 544 661
- DE-A1- 3 202 000
- GB-A- 2 291 720
- GB-A- 2 291 720
- JP-A- 59 000 130
- US-A- 4 309 085
- US-A- 5 777 717
- US-A- 5 867 247
- US-A1- 2004 036 966
- US-A1- 2004 036 966

## Description

La présente invention concerne un dispositif de vision binoculaire, chaque oculaire étant muni de lignes perpendiculaires, destiné à faciliter à son utilisateur l'appréhension tridimensionnelle de l'espace environnant notamment lors de son déplacement ou la pratique de certains sports.

Le US-A- 5 867 247 décrit plusieurs dispositifs de vision binoculaire dont un selon le préambule de la revendication 1.

Le DE-A-32 02 000 propose une grille optique formée des barres perpendiculaires de section transversale triangulaire destinée à corriger certaines aberrations optiques.

Le JP-A-59 000 130 propose de lunettes dont la surface est munie d'une grille de lignes créant à la surface de deux verres une sorte de voilette pour de raisons purement esthétiques.

Le US-A-4 309 085 propose de verres de contact munis de lignes parallèles horizontales ou verticales ou une grille ou de cercles concentriques permettant de mesurer certaines caractéristiques de l'oeil qui évoluent.

Le EP-A-1 544 661 décrit un dispositif de vision binoculaire pour l'entraînement des golfeurs

Le GB 2 291 720 décrit un dispositif de vision binoculaire comprenant deux réticules auto réglables maintenant une orientation prédéterminée pour toute distance inter-pupillaire. Les réticules sont munis de trois lignes horizontales et trois lignes verticales rapprochées.

Le US 2004/036966 décrit un télescope binoculaire muni de deux réticules portant de dessins. Un des dessins possible est deux lignes perpendiculaire se coupant su centre de vision. Le but de ces réticules est d'aider au réglage de la distance inter-pupillaire et à la mise au point de deux oculaires.

Il est connu que les apprentis conducteurs ont tendance à fixer l'obstacle à éviter ou contourner ou à dépasser au lieu de se fixer sur l'objectif à atteindre, avec comme résultat d'être attirés par l'obstacle contre lequel se dirigent. De même le funambule ne doit pas regarder les bouts de ses pieds ou le vide mais l'objectif à atteindre c'est-à-dire l'extrémité de la corde. Le skieur qui regarde les bouts de ses lattes n'arrivera pas à guider ses skis et il perdra son équilibre ou ira tout droit.

Même après l'apprentissage, dans les exemples susmentionnés qui de loin ne constituent pas une liste exhaustive, on a tendance dans certaines situations à se tenir mal, par exemple, pencher la tête dans un virage en conduisant un véhicule ce qui a pour effet de bloquer les mouvements.

Fort de ses constatations l'inventeur a essayé de trouver un moyen permettant une utilisation correcte de la vision binoculaire qui permet d'appréhender l'espace environnant en trois dimensions en adoptant une posture correcte.

L'objet de la présente invention, qui est d'une étonnante simplicité, aide son utilisateur à avoir en permanence cette appréhension de l'espace environnant tout en fixant l'objectif à atteindre.

Selon la revendication 1, chaque oculaire est muni uniquement d'une première ligne d'horizon) et d'une ligne perpendiculaire à la première, que le point d'intersection de ces deux lignes uniques est matérialisé par un point visible situé approximativement au centre du champ de vision de chaque oculaire.

Les lignes perpendiculaires (verticales) à la ligne d'horizon au centre de la vision donnent à l'utilisateur les degrés exacts de rotation de la tête à respecter en rapport avec sa vitesse de déplacement. La ligne d'horizon (horizontale) représente l'assiette. Le réglage se fait en fermant l'oeil gauche, la croix formée par l'intersection de deux lignes doit se trouver au centre de la vision de l'oeil droit et vise versa.

En utilisant correctement le dispositif c'est à dire en regardant tout en maintenant la ligne d'horizon horizontale on obtient une posture de la personne correcte. Elle appréhende l'espace en trois dimensions et ceci lui permet d'anticiper correctement ses différentes actions. Ainsi, par exemple, lors d'un travail dressage au sol, le cavalier a une vision de l'ensemble du cheval et notamment de quatre pattes du cheval et non seulement des pattes antérieures, ou tout ce qui s'apparente a la locomotion d'un quadrupède - des fonctions pour lesquelles notre cerveau n'a pas été conçu ou que notre cerveau a perdu lors de notre évolution. Ses ordres et actions se font calmement sans stress lié à l'action immédiate qui, est, par exemple, de franchir juste l'obstacle qui est devant le cheval. Aussi bien le cavalier que le cheval agissent calmement, ils se fatiguent moins et atteignent le but fixé. La scène est vécue en temps réel et les séquences locomotrices sont décomposées par rapport à la réalité effective du déroulement de la scène vécue en temps réel et non d'une analyse juste devant le résultat à obtenir qui souvent se traduit par des mouvements exagérés voire conditionnées en vue du résultat. En conduisant un véhicule et entrant dans un virage pencher son corps ou sa tête fausse la vision de l'espace et on est obligé de corriger la direction ou la vitesse.

Selon une exécution lesdites lignes ont une épaisseur d'environ 0.25 mm.

Selon l'invention ledit dispositif est une paire de lunettes ou une visière de casque ou le pare-brise d'un véhicule ou une paire de verres de contact ou une monture sans verres.

Selon une exécution lesdites lignes sont matérialisées par des lignes opaques, ou translucides ou en peinture luminescente ou les frontières entre deux couleurs d'un matériau transparent coloré ou l'impression ou gravure desdites lignes sur ledit matériau. La peinture luminescente est particulièrement utile pour la vision nocturne ou en cas de faible luminosité.

Selon une autre exécution lesdites lignes sont matérialisées par des fils ou faisceaux lumineux et des moyens permettant de régler leurs positions. Ces moyens ne sont pas applicables aux verres de contact

Selon une exécution les deux lignes perpendiculaires aux lignes d'horizon s'étendent jusqu'aux bords du dispositif binoculaire.

Selon une autre exécution les deux lignes perpendiculaires aux lignes d'horizon s'étendent du bord inférieur du dispositif et s'arrêtent après leur intersection avec les lignes d'horizon

Alternativement les deux lignes perpendiculaires aux lignes d'horizon peuvent s'étendre du bord supérieur du dispositif et s'arrêtent après leur intersection avec les lignes d'horizon.

Si le dispositif binoculaire est une paire de verres de contact les lignes peuvent être insérées entre deux couches constituant les verres de contact.

L'inventeur a constaté l'efficacité de ce dispositif en tendant des fils sur la face extérieure d'une paire des lunettes.

L'invention sera décrite plus en détail à l'aide du dessin annexé.

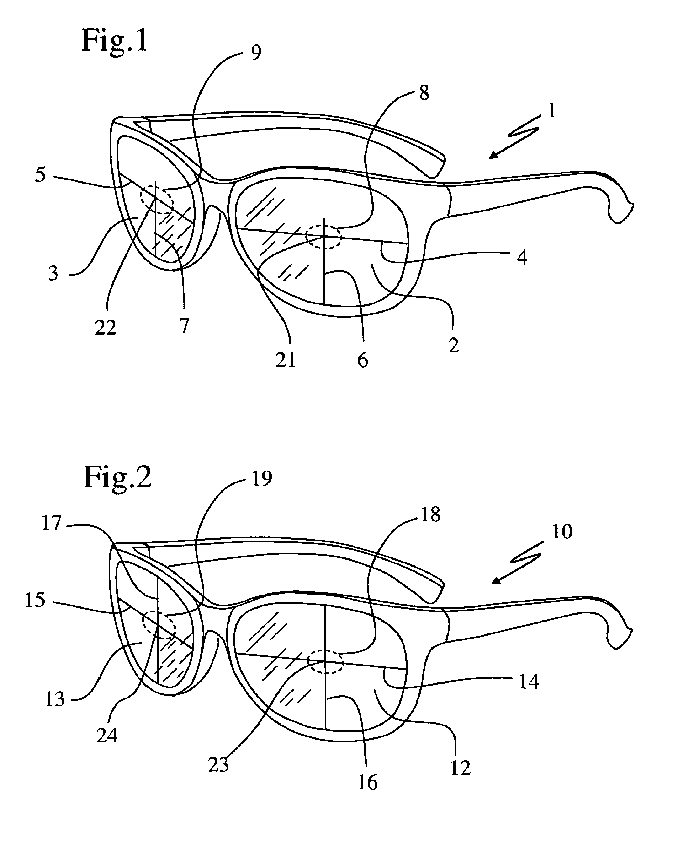

Les figures 1 et deux représentent en perspective deux paires de lunettes selon deux modes d'exécution.
La figure 1 représente une paire des lunettes 1 dont les verres 2 et 3 sont munis de deux traits de ligne d'horizon (horizontaux) 4 et 5 et deux traits 6 et 7 perpendiculaires (verticaux) aux premiers. Les points d'intersection 21, 22 des traits d'horizon avec les traits perpendiculaire sont situés approximativement aux centres des champs de vision sont matérialisés et visibles, illustrés ici en pointillé 8 et 9. Pour que ces traits soient visibles sans gêner la vision ils ont une épaisseur d'environ 0.25 mm. Ils peuvent être formés par impression ou gravure ou en jouant sur la différence des couleurs entre les parties du verre. Ils peuvent aussi être des éléments rapportés, par exemple, un fil ou similaire, avec des moyens de fixation simples permettant de mettre et enlever les fils voire de régler leur position par rapport au champ de vision de l'utilisateur. En effet, les utilisateurs ne portent pas les lunettes de la même manière, certains positionnent les verres très près des yeux et d'autres plus loin.

Le même peut être appliqué sur une visière d'un casque ou le pare-brise d'un véhicule. Ce qui est important est que les lignes par leur épaisseur et couleur de perturbent pas la vision de l'utilisateur.

Comme expliqué précédemment, l'utilisateur en vision binoculaire en maintenant cette ligne d'horizon horizontale réussit une analyse tridimensionnelle qui a pour se traduit par des séquences locomotrices décomposées par rapport à la réalité effective du déroulement de la scène vécue en temps réel et non par rapport au résultat à obtenir ou des mouvements conditionnés en vue d'un résultat. Les lignes perpendiculaires (verticales) aux lignes d'horizon au centre de la vision donnent à l'utilisateur les degrés exacts de rotation de la tête à respecter en rapport avec sa vitesse de déplacement. La ligne d'horizon (horizontale) représente l'assiette. La lecture de partie hachurée par notre cerveau matérialise un couloir. Le couloir représente le passage obligatoire d'un virage par exemple. Le réglage se fait en fermant l'oeil gauche, la croix formée par l'intersection de deux lignes doit se trouver au centre de la vision de l'oeil droit et vise versa.

La différence du dispositif de la figure 1 et celui de la figure 2 est le fait que les traits perpendiculaires 16 et 17 s'étendent du bord inférieur au bord supérieur de la paire de lunettes 10, tandis que à la figure 1 les traits 6 et 7 dépassent les points d'intersection 21, 22 avec les traits d'horizon 4 et 5 d'environ un cm. Mis à part cette différence les éléments référencés 10-15 et 18, 19 de la figurent 2 correspondent aux éléments décrits 1-5 et 8,9 de la figure 1.

Dans certaines applications et notamment la pratique du golf il s'avère que les traits perpendiculaires aux lignes d'horizon doivent commencer au bord supérieur et s'arrêtent après les points d'intersection.

De verres de contact peuvent aussi être utilisés munis de ces lignes mais pas les fils ou faisceaux lumineux.

Concernant les faisceaux lumineux on peut utiliser deux diodes (LED) dont les faisceaux se croisent dans le champ de vision. L'alimentation de ces diodes peut être assurée par une pile. Si l'on souhaite pouvoir régler le point d'intersection de deux faisceaux lumineux pour l'adapter au champ de vision de l'utilisateur les diodes peuvent par Dans le cas de verres montés sur une monture ou les verres de contact il peu s'agir de verres sans aucune correction de la vision ou avec la correction prescrite par le médecin, teintés ou pas.

Une monture sans verres peut être utilisée, portée directement par l'utilisateur ou à accrocher sur la monture habituellement portée par l'utilisateur pour se protéger du soleil ou pour corriger la vue.

Les montures et les éventuels verres peuvent être faits de tout matériau utilisé habituellement.

Un système de vision nocturne peut aussi être muni du dispositif selon l'invention en munissant les oculaires avec des lignes selon l'invention directement sur les vers ou par une monture adadptée.

## Revendications

1. Dispositif de vision binoculaire (1, 10), chaque oculaire (2, 3; 12, 13) étant muni uniquement d'une première ligne d'horizon (4, 5; 14, 15) et d'une ligne (6, 7 ; 16, 17) perpendiculaire à la première, le point d'intersection de ces deux lignes uniques étant matérialisé par un point visible (21, 22; 23, 24) situé approximativement au centre du champ de vision (8, 9; 18, 19) de chaque oculaire, **caractérisé par le fait que** ledit dispositif est une paire de lunettes ou une visière de casque ou le pare-brise d'un véhicule ou une paire de verres de contact ou une monture de lunettes sans verres.

2. Dispositif selon la revendication 1, **caractérisé par le fait que** lesdites lignes (4, 5, 6, 7; 14, 15, 16, 17) ont une épaisseur d'environ 0.25 mm.

3. Dispositif selon l'une des revendications 1 à 2, **caractérisé par le fait que** lesdites lignes sont matérialisées par des lignes opaques, ou translucides ou en peinture luminescente ou les frontières entre deux couleurs d'un matériau transparent coloré ou l'impression ou gravure desdites lignes sur ledit matériau.

4. Dispositif selon l'une des revendications 1 à 2, **caractérisé par le fait que** lesdites lignes sont des fils ou faisceaux lumineux et des moyens à glissières permettant de régler leurs positions par rapport au champ de vision à l'exception de verres de contact.

5. Dispositif selon l'une des revendications 1 à 4, **caractérisé par le fait que** les deux lignes perpendiculaires (16, 17) aux lignes d'horizon (14, 15) s'étendent jusqu'aux bords du dispositif binoculaire.

6. Dispositif selon l'une des revendications 1 à 3, **caractérisé par le fait que** les deux lignes perpendiculaires (6, 7) aux lignes d'horizon (4, 5) s'étendent du bord inférieur du dispositif et s'arrêtent après leur intersection (21, 22) avec les lignes d'horizon (4, 5).

7. Dispositif selon l'une des revendications 1 à 3, **caractérisé par le fait que** la ligne perpendiculaires à la ligne d'horizon s'étend du bord supérieur du dispositif et s'arrête après son intersection avec la ligne d'horizon.

8. Dispositif selon l'une des revendications 1, 2, 3, 5, 6, 7, **caractérisé par le fait que** le dispositif comprend deux verres de contact et que lesdites lignes sont insérées entre deux couches constituant les verres de contact.

## Claims

1. A binocular viewing device (1, 10), each eyepiece (2, 3; 12, 13) being provided only with one first horizon line (4, 5; 14, 15) and one line (6, 7; 16, 17) perpendicular to the first, the point of intersection of these two single lines is marked by a visible point (21, 22; 23, 24) situated approximately at the center of the field of vision (8, 9; 18, 19) of each eyepiece, **characterized in that** said device is a pair of glasses or a helmet visor or the windshield of a vehicle or a pair of contact lenses or a glasses frame without lenses.

2. The device as claimed in claim 1, **characterized in that** said lines (4, 5, 6, 7; 14, 15, 16, 17) have a thickness of about 0.25 mm.

3. The device as claimed in one of claims 1 to 2, **characterized in that** said lines are marked by lines that are opaque, or translucent or in luminescent paint or the borders between two colors of a colored transparent material or the printing or engraving of said lines on said material.

4. The device as claimed in one of claims 1 to 2, **characterized in that** said lines are wires or light beams and slide means enabling their position in relation to the field of view to be adjusted, with the exception of contact lenses.

5. The device as claimed in one of claims 1 to 4, **characterized in that** the two lines (16, 17) perpendicular to the horizon lines (14, 15) extend to the edges of the binocular device.

6. The device as claimed in one of claims 1 to 4, **characterized in that** the two lines (6, 7) perpendicular to the horizon lines (4, 5) extend from the lower edge of the device and stop after their intersection (21, 22) with the horizon lines (4, 5).

7. The device as claimed in one of claims 1 to 3, **characterized in that** the line perpendicular to the horizon line extends from the upper edge of the device and stops after its intersection with the horizon line.

8. The device as claimed in one of claims 1, 2, 3, 5, 6, 7, **characterized in that** the device comprises two contact lenses and **in that** said lines are inserted between two layers constituting the contact lenses.

## Patentansprüche

1. Binokulare Betrachtungseinrichtung (1, 10), bei der jedes Okular (2, 3; 12, 13) ausschliesslich mit einer ersten Horizontlinie (4, 5; 14, 15) und einer dazu senkrecht verlaufenden Linie (6, 7; 16, 17) versehen ist, wobei der Schnittpunkt dieser beiden einzigen Linien durch einen sichtbaren Punkt (21, 22; 23, 24) materialisiert ist, der sich ungefähr in der Mitte des Sichtfelds (8, 9; 18, 19) jedes Okulars befindet, **dadurch gekennzeichnet, dass** die genannte Einrichtung als Brille oder als Helmvisier oder als Windschutzscheibe eines Fahrzeugs oder als Kontaktlinsenpaar oder als Brillengestell ohne Gläser verwirklicht ist.

2. Einrichtung nach Anspruch 1, **dadurch gekennzeichnet, dass** die genannten Linien (4, 5, 6, 7; 14, 15, 16, 17) eine Dicke von etwa 0,25 mm aufwiesen.

3. Einrichtung nach einem der Ansprüche 1 und 2, **dadurch gekennzeichnet, dass** die genannten Linien durch undurchsichtige Linien oder durchscheinende Linien oder durch Linien aus Leuchtfarbe oder als Grenze zwischen zwei Farben eines farbigen transparenten Materials oder durch Aufdruck oder Gravur der genannten Linien auf dem genannten Material verwirklicht sind.

4. Einrichtung nach einem der Ansprüche 1 und 2, **dadurch gekennzeichnet, dass** die genannten Linien leuchtende Fäden oder Strahlen sind und Schiebemittel vorgesehen sind, mit denen die Position der Linien auf dem Sichtfeld einstellbar ist, mit Ausnahme der Kontaktlinsen.

5. Einrichtung nach einem der Ansprüche 1 bis 4, **dadurch gekennzeichnet, dass** sich die beiden Linien (16, 17), welche senkrecht zu den Horizontlinien (14, 15) verlaufen, bis zu den Rändern der binokularen Einrichtung erstrecken.

6. Einrichtung nach einem der Ansprüche 1 bis 3, **dadurch gekennzeichnet, dass** sich die beiden Linien (6, 7), welche senkrecht zu den Horizontlinien (4, 5) verlaufen, vom unteren Rand der Einrichtung erstrecken und dann nach ihrem Schnittpunkt (21, 22) mit den Horizontlinien (4, 5) enden.

7. Einrichtung nach einem der Ansprüche 1 bis 3, **dadurch gekennzeichnet, dass** sich die Linie, welche senkrecht zur Horizontlinie verläuft, vom oberen Rand der Einrichtung erstreckt und dann nach ihrem Schnittpunkt mit der Horizontlinie endet.

8. Einrichtung nach einem der Ansprüche 1, 2, 3, 5, 6, 7, **dadurch gekennzeichnet, dass** die Einrichtung zwei Kontaktlinsen umfasst, und dass die genannten Linien zwischen zwei Schichten angeordnet sind, aus denen die Kontaktlinsen bestehen.
